# EUROPEAN PATENT SPECIFICATION

(11) **EP 2 594 528 B1**
(45) Date of publication and mention of the grant of the patent: **04.01.2017**
(21) Application number: 12007780.5
(22) Date of filing: 16.11.2012
(51) Int. Cl.: C01B 3/38, F01K 23/06, F02C 3/30

(54) **Decarbonized fuel generation**
Erzeugung von entkohltem Kraftstoff
Production de combustible décarboné

(30) Priority: 17.11.2011 US 201161560887 P; 12.11.2012 US 201213674189
(43) Date of publication of application: 22.05.2013
(73) Proprietor: Air Products and Chemicals, Inc., Allentown, PA 18195-1501 (US)
(72) Inventor: Palamara, John Eugene, Macungie, PA 18062 (US); Amy, Fabrice, Macungie, PA 18062 (US)
(74) Representative: Kador & Partner

(56) References cited:
- EP-A1- 2 233 433
- US-A1- 2010 199 682
- ERTESVAG I S ET AL: "Exergy analysis of a gas-turbine combined-cycle power plant with precombustion CO2 capture", ENERGY, PERGAMON PRESS, OXFORD, GB, vol. 30, no. 1, 1 January 2005 (2005-01-01), pages 5-39, XP027750606, ISSN: 0360-5442 [retrieved on 2005-01-01]

## Description

### BACKGROUND OF THE INVENTION

The subject matter of the instant invention relates to systems and methods for generating and using decarbonized fuel for power generation. In particular, the instant invention relates to an integrated system and method for generating a synthesis gas, removing carbon dioxide from the synthesis gas and using the synthesis gas for producing power.

A conventional practice for producing synthesis gas is described in U.S. Patent No 4,132,065. This patent discloses a continuous partial oxidation gasification process for producing synthesis gas. A hydrocarbonaceous fuel such as natural gas is reacted with a free oxygen containing gas, preferably air, optionally in the presence of a temperature moderator such as steam or water to produce synthesis gas. A portion of the synthesis gas is combusted in the presence of compressed air to produce a combustion product gas which is expanded in a gas turbine. Free oxygen containing gas is provided by a compressor that is driven by at least a portion of the power generated by the expansion of the combustion product gas in the gas turbine.

U.S. Pat No. 6,505,467 discloses a process producing electric energy, steam and carbon dioxide in concentrated form from a hydrocarbon feedstock. The process includes forming synthesis gas in an air driven autothermal reactor unit (ATR), heat exchanging the formed synthesis gas and thereby producing steam, treating at least part of the synthesis gas in a CO-shift reactor unit and carbon dioxide separation unit for formation of concentrated carbon dioxide and a lean hydrogen containing gas which is combusted in a combined cycle gas turbine for production of electric energy, and where air from the turbine is supplied to the ATR unit. The exhaust from the gas turbine is heat exchanged for the production of steam which together with steam generated upstream said unit is utilized in a power generator for production of substantially carbon dioxide - free electric energy. Steam may be fed to the gas turbine for diluting the hydrogen containing gas mixture.

US2010/0199682 A2 is directed to a process for the production of hydrogen from a hydrocarbon feedstock. The process comprises a stage in which a portion of a hydrocarbon feedstock is sent to a vapor-reforming unit and another portion of the feedstock sent to an autothermal reformer, a vapor-reforming stage, a stage of autothermal reforming, a vapor conversion stage and a stage for recovering carbon dioxide. The process allows recovering of CO₂, reducing the quantity of unconverted methane while maintaining a high overall energy yield.

There is a need in this art for a system and method for producing a decarbonized fuel, and using the fuel for producing power. There is also a need in this art for a system and method that can retrofit existing power plants in order for the existing power plants to produce power using a decarbonized fuel.

### BRIEF SUMMARY OF THE INVENTION

The instant invention solves problems with conventional practices by providing a decarbonized fuel that can be used for producing power and by enabling retrofitting of existing power plants to produce power using decarbonized fuel. "Decarbonized fuel" as used herein is defined as a gaseous fuel that forms less carbon dioxide when combusted than natural gas. Decarbonized fuel typically contains a large amount of hydrogen. Broadly, the instant invention relates to integrating syngas production with power generation.

When the instant invention is not employed for retrofitting an existing Natural Gas Combined Cycle (NGCC) power plant for burning a decarbonized fuel (DF), several challenges can arise concerning the integration of the power plant with the Decarbonized Fuel Generation (DFG) process. For example, steam produced by the Decarbonized Fuel Combined Cycle (DFCC) may not be at the appropriate conditions for use in the DF production process and can either be reduced in pressure or increased in pressure which may use additional fuel, increasing the carbon intensity of the process. Extraction of large amounts of steam from the DFCC steam turbine may cause the bottoming cycle to be less efficient than operation at the design conditions further reducing the efficiency of this approach. These challenges can be overcome in accordance with the instant invention by utilizing a second steam generation unit to produce the steam required for the DFG process and possibly for the DFCC unit, therefore not relying on steam extraction from the DFCC.

One aspect of invention for retrofitting an NGCC introduces a second, separate steam generation system which is integrated with the DFG and provides utilities optimized to the demands of the DFG. The introduction of a separate steam generation system for two distinct systems surprisingly offers several benefits for the retrofit of NGCC power plants to use DF including: optimization of the second steam system to most efficiently generate steam at the conditions employed by the DFG process; optimization of carbon dioxide transport costs by locating the DFG and the DFCC at different locations; generation of additional low carbon-intensity power from the process. As used herein, "low carbon-intensity" is intended to mean less than or equal to about 300 lbs CO₂/MWh. Preferably, the processes described herein are configured to generate power having a carbon intensity from about 100 to about 200 lbs CO₂/MWh, or from about 125 to about 175 lbs CO₂/MWh.

Further aspects of the invention may be understood with reference to the following lettered paragraphs:
A. A process for the generation of low carbon-intensity power comprising: reacting a first gaseous hydrocarbon stream with steam, an oxygen-containing stream, or a combination thereof to produce a syngas stream; reacting carbon monoxide and water in the syngas stream to form hydrogen and carbon dioxide; removing a substantial portion of the carbon dioxide from the syngas stream to create a decarbonized fuel stream; combusting a first portion of the decarbonized fuel stream in the presence of compressed air to produce a first combustion product gas; expanding the first combustion product gas through a turbine to generate electrical power; using a second portion of the decarbonized fuel stream to generate a first steam stream; and reacting the first steam stream with the first gaseous hydrocarbon stream.
B. The process of paragraph A, further comprising using the expanded first combustion product gas to generate electrical power and steam in a heat recovery steam generation unit.
C. The process of any of paragraphs A through B, wherein the second portion of the decarbonized fuel stream is used to generate the first steam stream in a steam generation unit.
D. The process of any of paragraphs A through C, further comprising generating a second steam stream in the steam generation unit.
E. The process of paragraph D, further comprising directing a portion of second steam stream to the turbine.
F. The process of any of paragraphs D through E, further comprising combining a portion of the second steam stream with the second portion of the decarbonized fuel stream to form a steam generation fuel stream and directing the steam generation fuel stream to the steam generation unit.
G. The process of any of paragraphs D through F, wherein the second steam stream is at a lower pressure than the first steam stream.
H. A process for the generation of low carbon-intensity power comprising: reacting a first gaseous hydrocarbon stream with steam, an oxygen-containing stream, or a combination thereof to produce a syngas stream; reacting carbon monoxide and water in the syngas stream to form hydrogen and carbon dioxide; removing a substantial portion of the carbon dioxide from the syngas stream to create a decarbonized fuel stream; combusting a first portion of the decarbonized fuel stream in the presence of compressed air to produce a first combustion product gas; expanding the first combustion product gas through a turbine to generate electrical power; using a second portion of the decarbonized fuel stream to generate a first steam stream; and reacting the first steam stream with the first gaseous hydrocarbon stream, wherein the second portion of the decarbonized fuel stream is also used to generate electrical power.
I. The process of paragraph H, further comprising using the expanded first combustion product gas to generate electrical power and steam in a heat recovery steam generation unit.
J. The process of any of paragraphs H through I, wherein the first steam stream and the electrical power are generated by the second portion of the decarbonized fuel stream in a combined heat and power cogeneration unit.
K. The process of any of paragraphs H through J, further comprising generating a second steam stream in the cogeneration unit.
L. The process of paragraph K, further comprising directing a portion of second steam stream to the turbine.
M. The process of any of paragraphs K through L, further comprising combining a portion of the second steam stream with the second portion of the decarbonized fuel stream to form a cogeneration fuel stream and directing the cogeneration fuel stream to the cogeneration unit.
N. The process of any of paragraphs K through M, wherein the second steam stream is at a lower pressure than the first steam stream.
O. A system for generating power comprising: a syngas generation unit, a water-gas shift unit, an acid gas removal unit, a steam generation unit, a gas turbine generation unit, a heat recovery steam generation unit, and a steam turbine unit.
P. The system of paragraph O, wherein the syngas generation unit is a steam methane reactor, a partial oxidation reactor, or an autothermal reactor.
Q. The system of any of paragraphs O through P, wherein the steam generation unit is a fired heater or a cogeneration unit.
R. The system of any of paragraphs O through Q, wherein the steam generation unit is configured to produce electrical power, steam, and an exhaust gas.
S. The system of any of paragraphs O through R, wherein the gas turbine generation unit produces an exhaust gas comprising less than 3.5 vol% CO₂.
T. The system of any of paragraphs O through S, wherein the gas turbine generation unit produces an exhaust gas comprising less than 1.0 vol% CO₂.
U. The system of any of paragraphs Q through T, wherein the cogeneration unit is a gas turbine heat recovery steam generator or a fuel cell.

### BRIEF DESCRIPTION OF SEVERAL VIEWS OF THE DRAWINGS

Figure 1 illustrates one aspect of the invention wherein syngas production is integrated with an existing natural gas combined cycle (NGCC) power generation.
Figure 2 illustrates a comparative base case wherein syngas production is integrated with power generation through steam export from the power generation island.
Figure 3 illustrates another aspect of the invention wherein syngas production is integrated with power generation.

### DETAILED DESCRIPTION OF THE INVENTION

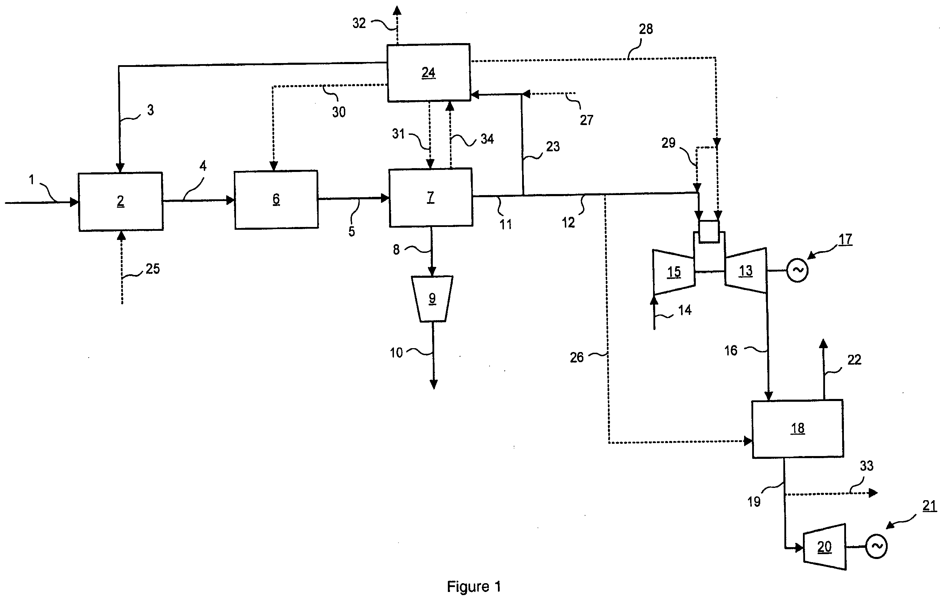

Certain aspects of the invention are illustrated by the Figures. Referring now to Figure 1, Figure 1 illustrates an aspect of the invention for producing low-carbon dioxide intensity power. A gaseous hydrocarbon stream 1 is fed to a syngas generation unit 2. There are several methods of producing synthesis gas from natural gas. Three such methods are based on the following processes: steam methane reforming (SMR); where heat for the reforming reactions is supplied by a fired heater, partial oxidation (POX), where natural gas is combined with oxygen and steam in the absence of catalyst; and autothermal reforming (ATR), which comprises a partial oxidation burner followed by a catalyst bed with a feed of natural gas, steam and oxygen to produce synthesis gas. Examples of SMR, POX and ATR that may be used in accordance with the instant invention are described in U.S. Patent Nos. 7,988,948; 4,132,065; and 5,628,931; the disclosures which are hereby incorporated by reference.

Each of these three processes produces high temperature synthesis gas (for example, SMR: 800 to 900 °C, POX: 1200 to 1400 °C, and ATR: 900 to 1100 °C). The excess heat generated in these processes may be used to generate steam. The excess may also be used in part in a secondary gas heated catalytic reformer (GHR).

The syngas generation unit **2,** uses a first steam stream **3** as a reactant. The resultant syngas stream **4** comprises hydrogen, carbon monoxide, carbon dioxide, methane, water, nitrogen, and other gases common to syngas production. The syngas stream is converted to a crude hydrogen stream **5** in a water-gas shift reaction unit **6.** The crude hydrogen stream **5** is fed to an acid gas removal unit **7** to remove substantial amounts of carbon dioxide and other acid gases that may be present. Removing "substantial amounts" or a "substantial portion" or other similar terms, as used herein, means that at least about 50%, and preferably at least about 90%, of the CO₂ in the syngas stream is removed. The carbon dioxide off-gas stream **8** is conditioned and compressed in a compression unit **9** to form a compressed carbon dioxide stream **10** suitable for subterranean sequestration or for injection in oil-field operations as an enhanced oil-recovery agent. A decarbonized fuel stream **11** that contains predominantly hydrogen (e.g., typically at least about 40 % hydrogen by volume, preferably more than 50%), is withdrawn from the acid gas removal unit **7** and split to form a first decarbonized fuel stream **12** that is fed to a gas turbine generator unit **13** where an air stream **14** is compressed in a compression unit **15** and combusted with the first decarbonized fuel stream **12** to generate a hot exhaust stream **16** and power with a first generator unit **17.** The hot exhaust stream **16** is passed to a heat recovery steam generation unit **18** where heat is recovered and a second steam stream **19** is generated and sent to a steam turbine unit **20** which transfers shaft work to a second generator unit **21.** The resulting exhaust stream **22** from the heat recovery steam generation unit **18,** which is largely free of carbon dioxide, is released to the atmosphere after cooling (e.g., the stream typically contains less than about 10 % carbon dioxide by volume, preferably less than 2%).

A second decarbonized fuel stream **23** is sent to a steam generation unit **24,** which may for example be a cogeneration unit producing steam and electrical or shaft power. The steam generation unit is used to produce a first steam stream **3** with low carbon intensity due to its use of decarbonized fuel stream **23.** The steam generation unit may be fired heater, or a cogeneration unit such as a gas turbine heat recovery steam generator, a fuel cell, or another device to produce power and steam. If the cogeneration unit is a fuel cell, further purification of the fuel stream **23** may be appropriate (e.g., due to the purity requirements of fuel cell technology).

Optionally, an oxidant stream **25** may be used in the syngas generation unit **2.**

Optionally, a portion of the first decarbonized fuel stream **12** may be separated to form a third decarbonized stream **26** which may be supplied to the heat recovery steam generation unit **18** for supplemental firing and steam production.

Optionally a second hydrocarbon stream **27** may be combined with the second decarbonized fuel stream **23** as fuel in the steam generation unit **24.** The second hydrocarbon stream **27** could be a solid, gas or liquid.

Optionally, a third steam stream **28** may be withdrawn from the steam generation unit **24** and fed to the gas turbine generator unit **13.** This is done to decrease the firing temperature of the decarbonized fuel.

Optionally, the third steam stream **28** may be split into a fourth steam stream **29** that is combined with the first decarbonized fuel stream **12.**

Optionally, a fifth steam stream **30** may be generated by the cogeneration unit **24** and supplied to, or upstream of, the water-gas shift reaction unit **6.**

Optionally, a sixth steam stream **31** may be supplied to the acid gas removal unit 7 to supply the heat used to regenerate the acid gas removal agent. This heat could be supplied by another heat transfer fluid.

Optionally, a seventh steam stream **32** may be exported from the system.

Optionally, an eighth steam stream **33** may be extracted from the second steam stream **19** and supplied to another process within the plant or exported to provide energy to another process.

Optionally, a fuel stream **34** could be provided to the steam generation unit **24** as additional fuel for this process. The fuel stream **34** may be gases released from a chemical or physical solvent process during the carbon dioxide removal process or a tail gas stream that is removed from an adsorption process.

### EXAMPLES

The following Examples are provided to illustrate certain aspects of the invention, and are not intended to limit the scope of the claims appended hereto.

Steady state heat and material balance simulations of the syngas generation unit **2,** the water gas shift reactor **6,** acid gas removal **7** units as well as the power production unit provide an example of the benefit of the present invention. In this example, the syngas generation unit is an oxygen blown autothermal reformer (ATR) operating on natural gas, followed by a catalytic water gas shift reactor. The oxygen for the reformer is provided by an air separation unit (ASU) that also provides nitrogen used in the process. The acid gas removal unit uses an amine based solvent and includes an adsorption column with a low pressure flash and reboiler strippers and is sized to remove 90% of the CO₂ present in the crude hydrogen stream. The power generation unit uses the decarbonized fuel plant and includes a gas turbine in a combined cycle arrangement with a single steam turbine. To limit flame temperature in the gas turbine, and therefore operate within design thermal and mechanical boundary conditions as well as limit NOx emission, the decarbonized fuel is diluted with the available N₂ supplied by the ASU as well with some medium pressure steam (MP steam) to reach a suitable heating value.

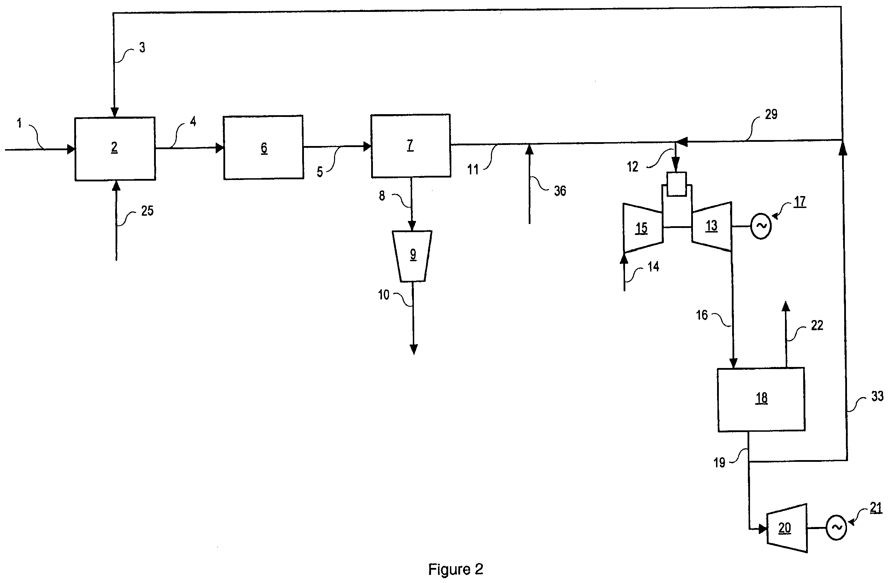

Referring now to Figure 2, Figure 2 illustrates a base case wherein steam for the decarbonized fuel generation unit DFG **2** and the gas turbine fuel dilution is exported from the steam cycle from the DFCC power generation unit (note that labeling of streams and process units is identical to Figure 1).

A natural gas stream **1** is feed to the ATR unit **2** in combination with an oxygen stream **25** and a steam stream **3.** The resulting syngas stream **4** contains hydrogen, carbon monoxide, carbon dioxide, methane, water, nitrogen, and other gases common to syngas production. The syngas stream is converted to a crude hydrogen stream **5** in a water-gas shift reaction unit **6.** The crude hydrogen stream **5** is fed to an amine solvent based acid gas removal unit 7 to remove substantial amounts of carbon dioxide and other acid gases that may be present. The heat used to strip the CO₂ from the amine solvent is provided by heat integration with the process syngas. The carbon dioxide off-gas stream **8** is conditioned and compressed in a compression unit **9** to form a compressed carbon dioxide stream **10** suitable for subterranean sequestration, for injection in oil-field operations as an enhanced oil-recovery agent, or for chemical production, among other uses suitable for carbon dioxide.

A decarbonized fuel stream **11** that contains predominantly hydrogen is withdrawn from the acid gas removal unit **7** and mixed with a nitrogen stream **36** and is then further diluted with a steam stream **29** in appropriate amount to reach suitable heating value to form the decarbonized gas turbine fuel stream **12.** The gas turbine fuel stream **12** is fed to a gas turbine generator unit **13** where an air stream **14** is compressed in a compression unit **15** and combusted with the gas turbine decarbonized fuel stream **12** to generate a hot exhaust stream **16** and power with a first generator unit **17.** The hot exhaust stream **16** is passed to a heat recovery steam generation unit **18** where heat is recovered and a second steam stream **19** is generated and sent to a steam turbine unit **20** which transfers shaft work to a second generator unit **21.** A portion of the steam stream **19** is diverted into steam stream **33** to be further split into stream **29** used as a fuel diluent for stream **12** and stream **3** to be used as a reactant for the reforming reaction in the reformer **2.** The exhaust stream **22** resulting from the combustion of the decarbonized fuel is largely free of carbon dioxide and may be released to the atmosphere after cooling.

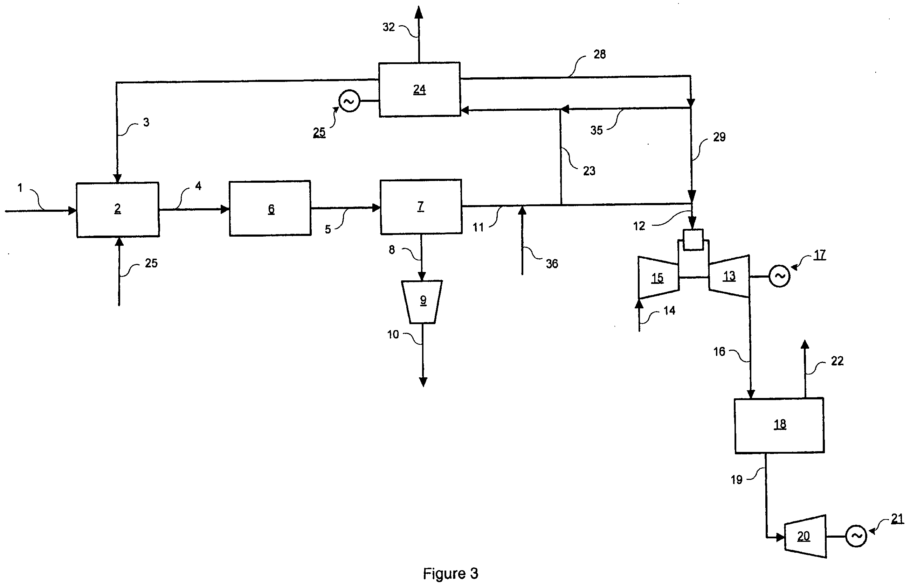

Referring now to Figure 3, Figure 3 illustrates an aspect of the present invention wherein the example shown in Figure 2 is modified by adding a cogeneration unit that uses fuel from the decarbonized fuel production unit to generate power and steam for the process, therefore avoiding extracting steam from the combined cycle power generation unit. (Note that labeling of streams and process units in Figure 3 is identical to that of Figures 1 and 2).

A natural gas stream **1** is feed to the ATR unit **2** in combination with an oxygen stream **25** and a steam stream **3.** The resulting syngas stream **4** contains hydrogen, carbon monoxide, carbon dioxide, methane, water, nitrogen, and other gases common to syngas production. The syngas stream is converted to a crude hydrogen stream **5** in a water-gas shift reaction unit **6.** The crude hydrogen stream **5** is fed to an amine solvent based acid gas removal unit 7 to remove substantial amounts of carbon dioxide and other acid gases that may be present. The heat used to strip the CO₂ from the amine solvent is provided by heat integration with the process syngas. The carbon dioxide off-gas stream **8** is conditioned and compressed in a compression unit **9** to form a compressed carbon dioxide stream **10** suitable for subterranean sequestration, for injection in oil-field operations as an enhanced oil-recovery agent, chemical production, among other suitable uses for carbon dioxide.

A decarbonized fuel stream **11** that contains predominantly hydrogen is withdrawn from the acid gas removal unit **7** and mixed with a nitrogen stream **36** to form a diluted decarbonized fuel stream. That diluted decarbonized fuel stream is split into stream **23,** which is further diluted with steam stream **35** in an appropriate amount to reach the appropriate heating value to be used as the cogeneration unit **24** fuel, and the remaining portion of the first diluted decarbonized fuel stream is then further diluted with a steam stream **29** in an appropriate amount to reach suitable heating value to form the decarbonized gas turbine fuel stream **12.** The cogeneration unit uses the diluted decarbonized fuel stream having the appropriate heating value to generate a medium pressure steam stream **28** to be used as fuel diluent in the process and a high pressure steam stream **3** to be used as a reactant in the reforming reaction in the reformer 2. The cogeneration unit **24** also produces power through the power generating unit **25** and an exhaust stream **32** that is largely free of carbon dioxide is released to the atmosphere after cooling. The gas turbine fuel stream **12** is fed to a gas turbine generator unit **13** where an air stream **14** is compressed in a compression unit **15** and combusted with the gas turbine decarbonized fuel stream **12** to generate a hot exhaust stream **16** and power with a first generator unit **17.** The hot exhaust stream **16** is passed to a heat recovery steam generation unit **18** where heat is recovered and a second steam stream **19** is generated and sent to a steam turbine unit **20** which transfers shaft work to a second generator unit **21.** The exhaust stream **22** resulting from the combustion of the decarbonized fuel is largely free of carbon dioxide may be released to the atmosphere after cooling.

The Examples shown in Figure 2 (base case) and Figure 3 (with cogeneration unit) have been simulated using ASPEN Plus with the following assumptions:
- The decarbonized fuel production unit DFG is sized to produce enough fuel to match the heat rate of two GE 7FA gas turbines (LHV: 1033.08 MW (3,525 MMBTU/hr) total or 8712.3 kJ/kWh (8,275.66 BTU/kW.hr)).
- The suitable heating value for the decarbonized fuel to be used in the gas turbine is 5589 kJ/m³ (150 BTU/SCF) (LHV)
- The cogeneration unit comprises a gas turbine that uses diluted decarbonized fuel having a 5589 kJ/m³ (150 BTU/SCF) (LHV) heating value and the same heat rate of 8712.3 kJ/kWh (8,275.66 BTU/kW.hr) as the turbines from the DFCC main power generation unit. The heat from the exhaust of the gas turbine of the cogeneration unit is recovered into a heat recovery steam generator to generate the exact amount of HP steam and MP steam that is used for both the reforming process (stream **3**) and fuel dilution (stream **28**).

The results of the simulations are summarized in Table 1.

**Table 1**

| | **Figure 2** | **Figure 3** |
|---|---|---|
| **Reformer Feedstock Inputs** | | |
| Fuel | natural gas | natural gas |
| O₂ to ATR feed C ratio (molar) | 0.57 | 0.57 |
| Steam to fuel C ratio (molar) | 2.52 | 2.52 |
| **Reformer Production** | | |
| Decarbonized fuel (m³/h ((MMSCFD)) | 378225 (321.3) | 439674 (373.5) |
| High pressure steam (kg/h (Klb/hr)) | 163157 (359.7) | 189646 (418.1) |
| **CC Power Plant: 2x7FA x1ST** | | |
| Diluted fuel import (kg/h (Klb/hr)) | 396117 (873.29) | 396117 (873.29) |
| Fuel, lower heating value (MW (MMBTU/hr)) | 1033.2 (3525.43) | 1033.2 (3525.43) |
| Gas turbine growth power output (MW) | 426.23 | 426.23 |
| Gas turbine growth heat rate, lower heating value (MJ/kWh (BTU/kW.hr)) | 872.6 (8271.20) | 872.6 (8271.20) |
| Steam turbine growth power output (MW) | 149.14 | 180.00 |
| Total net power output (MW) | 565.70 | 596.84 |
| Total net heat rate, lower heating | 657.5 (6231.98) | 623.2 (5906.83) |
| value (MJ/kWh (BTU/kW.hr)) | | |
| **Cogeneration Plant** | | |
| Diluted fuel import (kg/h (Klb/hr)) | 0 (0.00) | 64251 (141.65) |
| Fuel, lower heating value (MW (MMBTU/hr)) | 0 (0.00) | 167.6 (571.85) |
| Gas turbine growth power output (MW) | 0.00 | 69.14 |
| GT growth heat rate LHV (kJ/kWh (BTU/kW.hr)) | 0 (0.00) | 8726 (8271.20) |
| Total net power output (MW) | 0.00 | 67.55 |
| High pressure steam production (kg/h (Klb/hr)) | 0 (0.00) | 96379 (212.48) |
| Medium pressure steam production (kg/h (Klb/hr)) | 0 (0.00) | 16120 (35.54) |
| **Plant overall efficiency, lower heating value (kJ/kWh (BTU/kW.hr))** | 9160 (8681.76) | 9045 (8573.60) |
| **Plant overall efficiency, lower heating value (%)** | 39.3 | 39.8 |
| **Total plant power output (MW)** | 472.40 | 555.95 |
| **Reformer calculations** | | |
| Fuel feed (m³/h (MMSCFD)) | 127240 (108.09) | 147888 (125.63) |
| Fuel flow, lower heating value (MW (MMBTU/hr)) | 1201.9 (4101.25) | 1396.9 (4766.50) |
| O₂ feed, 97.5% purity (kg/h (Klb/hr)) | 100797 (222.22) | 117144 (258.26) |
| HP steam feed (kg/h (Klb/hr)) | 246101 (542.56) | 286017 (630.56) |
| **Decarbonized fuel calculations** | | |
| Total decarbonized fuel (m³/h (MMSCFD)) | 378272 (321.34) | 439626 (373.46) |
| Fuel flow, lower heating value (MW (MMBTU/hr)) | 1033.2 (3525.43) | 1200.8 (4097.28) |
| Fuel molar, lower heating value (kJ/m³ (BTU/SCF)) | 9810.6 (263.31) | 9810.6 (263.31) |
| N₂ for gas turbine fuel dilution (kg/h (Klb/hr)) | 317123 (699.14) | 368565 (812.55) |
| Medium pressure steam for fuel dilution (kg/h (Klb/hr)) | 13870 (30.58) | 16120 (35.54) |
| Total diluted fuel gas to gas turbine (m³/h (MMSCFD)) | 664031 (564.09) | 664031 (564.09) |
| Total diluted fuel gas to cogeneration unit (m³/h (MMSCFD)) | 0 0(0.00) | (0_{.}00) 107711 (91.50) |
| Diluted fuel gas molar, lower heating value (kJ/m³ (BTU/SCF)) | 5589 (149.99) | 5589 (149.99) |
| Diluted fuel gas mass, lower heating value (kJ/kg (BTU/lb)) | 9387.7 (4036.97) | 9387.7 (4036.97) |
| H₂ content (mol%) | 53.40 | 53.40 |
| **Steam import calculations** | | |
| High pressure steam (kg/h (Klb/hr)) | 82925 (182.82) | 0 (0.00) |
| Medium pressure steam for gas turbine fuel dilution (kg/h (Klb/hr)) | 13870 (30.58) | 0 (0.00) |
| **Acid gas calculations** | | |
| Wet feed to AGR (kmol/h (lbmol/hr)) | 29872.53 (65857.66) | 34718.06 (76540.22) |
| CO₂ export (kg/h (Klb/hr)) | 207776 (458.07) | 241482 (532.38) |
| Stripper reboiler duty (MW (MMBTU/hr)) | 54.8 (187.00) | 63.6 (217.00) |
| Overall carbon capture (%) | 90.00 | 90.00 |
| **Auxilliary power calculations** | | |
| ASU (MW) | 66.06 | 76.78 |
| CO₂ compressor (MW) | 20.28 | 23.56 |
| Feed compressor (MW) | 2.46 | 2.86 |
| AGR pumps (MW) | 4.51 | 5.24 |
| **Total auxiliary power (MW)** | 93.30 | 108.44 |

This example simulation shows that the present invention results in a higher power production (556 MW vs. 472 MW) and a higher overall thermal efficiency (39.8% vs. 39.3%) when compared to systems that do not incorporate the use of decarbonized fuel in a steam and power generation system that is separate from the DFCC main power generation unit.

Various terms have been defined above. To the extent a term used in a claim is not defined above, it should be given the broadest definition persons in the pertinent art have given that term as reflected in at least one printed publication or issued patent.

Certain embodiments and features of the invention have been described using a set of numerical upper limits and a set of numerical lower limits. For the sake of brevity, only certain ranges are explicitly disclosed herein. However, it should be appreciated that ranges from any lower limit to any upper limit are contemplated unless otherwise indicated. Similarly, ranges from any lower limit may be combined with any other lower limit to recite a range not explicitly recited, and ranges from any upper limit may be combined with any other upper limit to recite a range not explicitly recited. Further, a range includes every point or individual value between its end points even though not explicitly recited. Thus, every point or individual value may serve as its own lower or upper limit combined with any other point or individual value or any other lower or upper limit, to recite a range not explicitly recited. All numerical values are "about" or "approximately" the indicated value, and take into account experimental error and variations that would be expected by a person having ordinary skill in the art.

## Claims

1. A process for the generation of low carbon-intensity power comprising:
reacting a first gaseous hydrocarbon stream (1) with steam (3), an oxygen-containing stream (25), or a combination thereof to produce a syngas stream (4);
reacting carbon monoxide and water in the syngas stream (4) to form hydrogen and carbon dioxide;
removing a substantial portion of the carbon dioxide from the syngas stream (4) to create a decarbonized fuel stream (11);
combusting a first portion of the decarbonized fuel stream (12) in the presence of compressed air (14) to produce a first combustion product gas;
expanding the first combustion product gas through a turbine (13) to generate electrical power;
using a second portion of the decarbonized fuel stream (23) to generate a first steam stream (3) in a steam generation unit (24); and
reacting the first steam stream (3) with the first gaseous hydrocarbon stream, and
further comprising generating a second steam stream (28) in the steam generation unit (24), further comprising directing a portion of the second steam stream (28) to the turbine (13).

2. The process of claim 1, further comprising using the expanded first combustion product gas to generate electrical power and steam (19) in a heat recovery steam generation unit (18).

3. The process of claim 1 or 2, further comprising combining a portion of the second steam stream (35) with the second portion of the decarbonized fuel stream (23) to form a steam generation fuel stream and directing the steam generation fuel stream to the steam generation unit (24).

4. The process of any of claims 1 or 3, wherein the second steam stream (28) is at a lower pressure than the first steam stream (3).

5. A system for generating power comprising:
a syngas generation unit (2),
a water-gas shift unit (6),
an acid gas removal unit (7),
a steam generation unit (24),
a gas turbine generation unit (13),
a heat recovery steam generation unit (18), and;
a steam turbine unit (20),
wherein the steam generation unit (24) provides a first steam stream (3) to the syngas generation unit (2) and a second steam stream (28) to the gas turbine generation unit (13),
wherein the syngas generation unit (2) uses the first steam stream (3) to produce a syngas stream (4), the syngas stream (4) being converted to a crude hydrogen stream (5) in the water-gas shift reaction unit (6), the crude hydrogen stream (5) being fed to the acid gas removal unit (7), the acid gas removal unit (7) suitable for removing at least about 50% of the CO₂ in the syngas stream,
wherein a carbon dioxide off-gas stream (8) from the acid gas removal unit (7) is introduced in a compression unit (9) suitable to condition and compress the carbon dioxide off-gas stream (8) to form a compressed carbon dioxide steam (10),
wherein a decarbonized fuel stream (11) is withdrawn from the acid gas removal unit (7) and split to form a first decarbonized fuel stream (12) and a second decarbonized fuel stream (23),
wherein the first decarbonized fuel stream (12) is fed to the gas turbine generation unit (13), where an air stream (14) is compressed in a compression unit (15) and combusted with the first decarbonized fuel stream (12) in the gas turbine generation unit (13) to generate a hot exhaust stream (16) and power with a first generator unit (17) connected with the gas turbine generation unit (13),
wherein the hot exhaust stream (16) generated in the gas turbine generation unit (13) is passed to the heat recovery steam generation unit (18), wherein in the heat recovery steam generation unit (18) a steam stream (19) is generated and sent to the steam turbine unit (20) which transfers shaft work to a second generator unit (21), and the resulting exhaust stream (22) from the heat recovery steam generation unit (18) is released to the atmosphere after cooling,
and the second decarbonized fuel stream (23) is sent to the steam generation unit (24).

6. The system of claim 5, wherein the syngas generation unit (2) is a steam methane reactor, a partial oxidation reactor, or an autothermal reactor.

7. The system of claim 5 or 6, wherein the steam generation unit (24) is a fired heater or a cogeneration unit.

8. The system of claim 7, wherein the steam generation unit (24) is a cogeneration unit configured to produce electrical power, steam, and an exhaust gas.

9. The system of any of claims 7 to 8, wherein the cogeneration unit is a gas turbine heat recovery steam generator or a fuel cell.

## Patentansprüche

1. Verfahren zum Erzeugen von Energie mit geringer Kohlenstoffintensität, umfassend:
Reagieren von einem ersten gasförmigen Kohlenwasserstoffstrom (1) mit Dampf (3), einem sauerstoffhaltigen Strom (25) oder einer Kombination daraus, um einen Synthesegasstrom (4) herzustellen;
Reagieren von Kohlenmonoxid und Wasser in dem Synthesegasstrom (4), um Wasserstoff und Kohlendioxid zu bilden;
Entfernen von einem wesentlichen Teil des Kohlendioxids aus dem Synthesegasstrom (4), um einen entkarbonisierten Kraftstoffstrom (11) zu erzeugen;
Verbrennen von einem ersten Teil des entkarbonisierten Kraftstoffstroms (12) in Gegenwart von komprimierter Luft (14), um ein erstes Verbrennungsproduktgas herzustellen;
Expandieren von dem ersten Verbrennungsproduktgas durch eine Turbine (13), um elektrische Energie zu erzeugen;
Verwenden von einem zweiten Teil des entkarbonisierten Kraftstoffstroms (23), um in einer Dampferzeugungseinheit (24) einen ersten Dampfstrom (3) zu erzeugen; und
Reagieren von dem ersten Dampfstrom (3) mit dem ersten gasförmigen Kohlenwasserstoffstrom, und
ferner umfassend das Erzeugen von einem zweiten Dampfstrom (28) in der Dampferzeugungseinheit (24),
ferner umfassend das Leiten von einem Teil des zweiten Dampfstroms (28) zu der Turbine (13).

2. Verfahren nach Anspruch 1, ferner umfassend das Verwenden des expandierten ersten Verbrennungsproduktgases, um in einer Wärmerückgewinnungs-Dampferzeugungs-Einheit (18) elektrische Energie und Dampf (19) zu erzeugen.

3. Verfahren nach Anspruch 1 oder 2, ferner umfassend das Vereinen von einem Teil des zweiten Dampfstroms (35) mit dem zweiten Teil des entkarbonisierten Kraftstoffstroms (23), um einen Dampferzeugungskraftstoffstrom zu bilden, und Leiten des Dampferzeugungskraftstoffstroms zu der Dampferzeugungseinheit (24).

4. Verfahren nach einem der Ansprüche 1 oder 3, wobei der zweite Dampfstrom (28) einen geringeren Druck hat als der erste Dampfstrom (3) aufweist.

5. System zum Erzeugen von Energie, umfassend:
eine Synthesegaserzeugungseinheit (2),
eine Wassergas-Shift-Einheit (6),
eine Säuregasentfernungseinheit (7),
eine Dampferzeugungseinheit (24),
eine Gasturbinenerzeugungseinheit (13),
eine Wärmerückgewinnungs-Dampferzeugungs-Einheit (18), und;
eine Dampfturbineneinheit (20),
wobei die Dampferzeugungseinheit (24) einen ersten Dampfstrom (3) für die Synthesegaserzeugungseinheit (2) und einen zweiten Dampfstrom (28) für die Gasturbinenerzeugungseinheit (13) bereitstellt,
wobei die Synthesegaserzeugungseinheit (2) den ersten Dampfstrom (3) verwendet, um einen Synthesegasstrom (4) zu erzeugen, wobei der Synthesegasstrom (4) in der Wassergas-Shift-Reaktionseinheit (6) zu einem Rohwasserstoffstrom (5) umgewandelt wird, wobei der Rohwasserstoffstrom (5) der Säuregasentfernungseinheit (7) zugeführt wird, wobei die Säuregasentfernungseinheit (7) geeignet ist, mindestens etwa 50 % von dem CO₂ in dem Synthesegasstrom zu entfernen,
wobei ein Kohlendioxidabgasstrom (8) aus der Säuregasentfernungseinheit (7) in eine Kompressionseinheit (9) eingeführt wird, die geeignet ist, den Kohlendioxidabgasstrom (8) zu konditionieren und zu komprimieren, um einen komprimierten Kohlendioxiddampf (10) zu bilden,
wobei ein entkarbonisierter Kraftstoffstrom (11) aus der Säuregasentfernungseinheit (7) abgezogen und aufgeteilt wird, um einen ersten entkarbonisierten Kraftstoffstrom (12) und einen zweiten entkarbonisierten Kraftstoffstrom (23) zu bilden,
wobei der erste entkarbonisierte Kraftstoffstrom (12) der Gasturbinenerzeugungseinheit (13) zugeführt wird, wobei ein Luftstrom (14) in einer Kompressionseinheit (15) komprimiert und mit dem ersten entkarbonisierten Kraftstoffstrom (12) in der Gasturbinenerzeugungseinheit (13) verbrannt wird, um einen heißen Abgasstrom (16) und mit einer ersten Generatoreinheit (17), die mit der Gasturbinenerzeugungseinheit (13) verbunden ist, Energie zu erzeugen,
wobei der heiße Abgasstrom (16), der in der Gasturbinenerzeugungs-einheit (13) erzeugt wird, zu der Wärmerückgewinnungs-Dampferzeugungs-Einheit (18) geleitet wird,
wobei in der Wärmerückgewinnungs-Dampferzeugungs-Einheit (18) ein Dampfstrom (19) erzeugt wird und zu der Dampfturbineneinheit (20) geschickt wird, die eine Wellenarbeit auf eine zweiten Generatoreinheit (21) überträgt, und der resultierende Abgasstrom (22) aus der Wärmerückgewinnungs-Dampferzeugungs-Einheit (18) nach dem Abkühlen in die Atmosphäre entlassen wird, und
der zweite entkarbonisierte Kraftstoffstrom (23) zu der Dampferzeugungseinheit (24) geschickt wird.

6. System nach Anspruch 5, wobei die Synthesegaserzeugungseinheit (2) einen Dampf-Methan-Reaktor, ein partieller Oxidationsreaktor oder ein Autothermalreaktor ist.

7. System nach Anspruch 5 oder 6, wobei die Dampferzeugungseinheit (24) ein befeuerter Erhitzter oder eine Coerzeugungseinheit ist.

8. System nach Anspruch 7, wobei die Dampferzeugungseinheit (24) eine Coerzeugungseinheit ist, die gestaltet ist, elektrische Energie, Dampf und ein Abgas herzustellen.

9. System nach einem der Ansprüche 7 bis 8, wobei die Erzeugungseinheit ein Gasturbinen-Wärmerückgewinnungs-Dampfgenerator oder eine Kraftstoffzelle ist.

## Revendications

1. Processus de génération d'une énergie à faible intensité de carbone, qui comprend :
la réaction d'un premier flux d'hydrocarbures gazeux (1) avec de la vapeur (3), un flux qui contient de l'oxygène (25), ou une combinaison des deux, afin de produire un flux de gaz de synthèse (4) ;
la réaction de monoxyde de carbone et d'eau dans le flux de gaz de synthèse (4) afin de former de l'hydrogène et du dioxyde de carbone ;
l'élimination d'une partie substantielle du dioxyde de carbone du flux de gaz de synthèse (4) afin de créer un flux de combustible décarbonisé (11) ;
la combustion d'une première partie du flux de combustible décarbonisé (12) en présence d'air comprimé (14) afin de produire un premier gaz de produit de combustion ;
la dilatation du premier gaz de produit de combustion dans une turbine (13) afin de générer une énergie électrique ;
l'utilisation d'une seconde partie du flux de combustible décarbonisé (23) afin de générer un premier flux de vapeur (3) dans une unité de génération de vapeur (24) ; et
la réaction du premier flux de vapeur (3) avec le premier flux d'hydrocarbures gazeux, et
qui comprend en outre la génération d'un second flux de vapeur (28) dans l'unité de génération de vapeur (24), qui comprend en outre l'orientation d'une partie du second flux de vapeur (28) vers la turbine (13).

2. Processus selon la revendication 1, qui comprend en outre l'utilisation du premier gaz de produit de combustion dilaté afin de générer une énergie électrique et de la vapeur (19) dans une unité de génération de vapeur à récupération de chaleur (18).

3. Processus selon la revendication 1 ou 2, qui comprend en outre la combinaison d'une partie du second flux de vapeur (35) avec la seconde partie du flux de combustible décarbonisé (23) afin de former un flux de combustible par génération de vapeur, et l'orientation du flux de combustible par génération de vapeur vers l'unité de génération de vapeur (24).

4. Processus selon l'une quelconque des revendications 1 ou 3, dans lequel le second flux de vapeur (28) est à une pression inférieure au premier flux de vapeur (3).

5. Système de génération d'énergie qui comprend :
une unité de génération de gaz de synthèse (2),
une unité de conversion de gaz à l'eau (6),
une unité d'élimination du gaz acide (7),
une unité de génération de vapeur (24),
une unité de génération de turbine à gaz (13),
une unité de génération de vapeur par récupération de chaleur (18) ; et
une unité de turbine à vapeur (20),
dans lequel l'unité de génération de vapeur (24) fournit un premier flux de vapeur (3) à l'unité de génération de gaz de synthèse (2) et un second flux de vapeur (28) à l'unité de génération de turbine à gaz (13),
dans lequel l'unité de génération de gaz de synthèse (2) utilise le premier flux de vapeur (3) pour produire un flux de gaz de synthèse (4), le flux de gaz de synthèse (4) étant transformé en un flux d'hydrogène brut (5) dans l'unité de réaction de conversion de gaz à l'eau (6), le flux d'hydrogène brut (5) étant fourni à l'unité d'élimination du gaz acide (7), l'unité d'élimination du gaz acide (7) étant adaptée pour éliminer au moins environ 50% du CO₂ présent dans le flux de gaz de synthèse,
dans lequel un flux de gaz résiduel de dioxyde de carbone (8) qui provient de l'unité d'élimination du gaz acide (7) est introduit dans une unité de compression (9) adaptée pour conditionner et comprimer le flux de gaz résiduel de dioxyde de carbone (8) afin de former un flux de dioxyde de carbone comprimé (10),
dans lequel un flux de combustible décarbonisé (11) est retiré de l'unité d'élimination du gaz acide (7) et est séparé afin de former un premier flux de combustible décarbonisé (12) et un second flux de combustible décarbonisé (23),
dans lequel le premier flux de combustible décarbonisé (12) est fourni à l'unité de génération de turbine à gaz (13), dans laquelle un flux d'air (14) est comprimé dans une unité de compression (15) et est brûlé avec le premier flux de combustible décarbonisé (12) dans l'unité de génération de turbine à gaz (13) afin de générer un flux d'échappement chaud (16) et de l'énergie avec une première unité de génération (17) reliée à l'unité de génération de turbine à gaz (13),
dans lequel le flux d'échappement chaud (16) généré dans l'unité de génération de turbine à gaz (13) est transmis à l'unité de génération de vapeur à récupération de chaleur (18),
dans lequel, dans l'unité de génération de vapeur à récupération de chaleur (18), un flux de vapeur (19) est généré et est envoyé vers l'unité de turbine à vapeur (20), qui transfère le flux résultant vers une seconde unité de génération (21), et le flux d'échappement résultant (22) qui provient de l'unité de génération de vapeur à récupération de chaleur (18) est libéré dans l'atmosphère après refroidissement,
et le second flux de vapeur décarbonisé (23) est envoyé vers l'unité de génération de vapeur (24).

6. Système selon la revendication 5, dans lequel l'unité de génération de gaz de synthèse (2) est un réacteur de méthane à la vapeur, un réacteur d'oxydation partielle, ou un réacteur auto-thermique.

7. Système selon la revendication 5 ou 6, dans lequel l'unité de génération de vapeur (24) est un réchauffeur à combustion ou une unité de cogénération.

8. Système selon la revendication 7, dans lequel l'unité de génération de vapeur (24) est une unité de cogénération configurée pour produire une énergie électrique, de la vapeur, et un gaz d'échappement.

9. Système selon l'une quelconque des revendications 7 à 8, dans lequel l'unité de cogénération est un générateur de vapeur à récupération de chaleur de turbine à gaz ou une pile à combustible.
